# EUROPEAN PATENT SPECIFICATION

(11) **EP 2 984 312 B1**
(45) Date of publication and mention of the grant of the patent: **17.05.2017**
(21) Application number: 14717830.5
(22) Date of filing: 11.04.2014
(51) Int. Cl.: F01N 13/18, F01N 13/00, F01N 3/20, F01N 3/021, F01N 3/035

(54) **EMISSIONS CLEANING MODULE**
EMISSIONSREINIGUNGSMODUL
MODULE D'ÉPURATION DES GAZ D'ÉCHAPPEMENT

(30) Priority: 11.04.2013 GB 201306613
(43) Date of publication of application: 17.02.2016
(73) Proprietor: Perkins Engines Company Limited, Peterborough, Cambridgeshire PE1 5NA (GB)
(72) Inventor: ANAND, Samidha, Peterborough Cambridgeshire PE2 8FE (GB); ANDREWS, David, Peterborough Cambridgeshire PE6 7SR (GB); COTTON, Simon, Sleaford Lincolnshire NG34 0BW (GB); CLARK, Richard Thomas, Sleaford Lincolnshire NG34 0TP (GB)
(74) Representative: BRP Renaud & Partner mbB Rechtsanwälte Patentanwälte Steuerberater
(86) International application number: PCT/GB2014/051141
(87) International publication number: WO 2014/167351

(56) References cited:
- EP-A1- 2 251 579
- DE-A1-102008 054 267
- US-A1- 2010 186 381
- US-A1- 2010 186 388
- US-A1- 2010 186 394
- US-A1- 2012 017 574

## Description

### Technical Field

This disclosure relates to an apparatus for cleaning exhaust gases emitted during the operation of an engine such as an internal combustion engine and a mounting mechanism therefore.

### Background

Engines, for example internal combustion (IC) engines burning gasoline, diesel or biofuel, output various substances as part of their exhaust gases which must be treated to meet current and future emissions legislation. Most commonly those substances comprise hydrocarbons (HC), carbon monoxides (CO), mono-nitrogen oxides (NOₓ) and particulate matter, such as carbon (C), a constituent of soot. Some of those substances may be reduced by careful control of the operating conditions of the engine, but usually it is necessary to provide an emissions cleaning module downstream of the engine to treat at least some of those substances entrained in the exhaust gas. Various apparatus for reducing and/or eliminating constituents in emissions are known. For example, it is known to provide an oxidation device, such as a diesel oxidation catalyst (DOC) module, to reduce or to eliminate hydrocarbons (HC) and/or carbon monoxide (CO). Oxidation devices generally include a catalyst to convert those substances into carbon dioxide and water.

As a further example, emissions cleaning modules may include filtration devices, such as a diesel particulate filter (DPF) module, to restrict the particulates present in the exhaust gas from being output to atmosphere. The soot collected in the filtration device must be removed subsequently to maintain the efficiency of the filtration device. The methods by which soot may be removed from the filtration device are well known in the art and may generally be referred to as regeneration, which generally occurs at elevated temperatures.

In addition, it is known to reduce or eliminate mono-nitrogen oxides (NOₓ) in diesel combustion emissions by conversion to diatomic nitrogen (N₂) and water (H₂O) by catalytic reaction with reductant chemicals such as ammonia (NH₃) entrained in the exhaust gas. Generally ammonia is not present in exhaust gas and must therefore be introduced upstream of a catalyst, typically by injecting a urea solution into the exhaust gas which decomposes into ammonia at sufficiently high temperatures.

By these methods, engine emissions can be cleaned, meaning that a proportion of the substances which would otherwise be released to atmosphere are instead converted to carbon dioxide (CO₂), nitrogen (N₂) and water (H₂O).

US-A-2010/0186394, US-A-2010/0186388 and US-A-2010/0186381 all disclose an exhaust system comprising a plurality of exhaust treatment devices. Each document describes a mounting system which has a support surface, for supporting the exhaust treatment device, in the form of a bracket, to which is attached a strap or band, to secure the exhaust treatment device in place.

Against this background there is provided an emissions cleaning module and a mounting mechanism therefore.

### Summary of the disclosure

The disclosure therefore provides an emissions cleaning module comprising:
a conduit; and
a mounting mechanism for mounting the emissions cleaning module to an external support;
said mounting mechanism comprising:
   at least one adjustable strap which is clamped around the conduit; and
   at least one saddle which is mounted to the conduit by the at least one adjustable strap;
   wherein the at least one saddle comprises an upper surface which is shaped so as to conform substantially to a portion of the conduit;
   characterised in that the at least one saddle comprises an upper element and a lower element, the upper element and the lower element being connectable together; the upper element being retained to the conduit respectively by means of one of the at least one adjustable strap which passes through the at least one saddle between the upper and lower elements.

The disclosure also provides an emissions cleaning module comprising:
a first conduit containing a diesel oxidation catalyst (DOC) module and a diesl particulate filter (DPF) module ;
a second conduit containing a selective catalytic reduction (SCR) module; and
a mounting mechanism for mounting the emissions cleaning module to an external support;
said mounting mechanism comprising:
   at least one adjustable strap which is clamped around each conduit; and
   at least one saddle which is mounted to each conduit by the at least one adjustable strap;
   wherein the first and second conduits are mounted adjacent one another on the mounting mechanism and the at least one saddle comprises an upper surface which is shaped so as to conform substantially to a portion of the conduit;
   characterised in that the at least one saddle comprises an upper element and a lower element, the upper element and the lower element being connectable together; the upper element being retained to the conduit respectively by means of one of the at least one adjustable strap which passes through the at least one saddle between the upper and lower elements.

The disclosure further provides mounting mechanism for an emissions cleaning module comprising:
at least a pair of adjustable straps;
at least a pair of saddles; and
a mounting plate;
wherein each of the saddles comprise an upper surface which is shaped so as to conform substantially to a portion of the conduit and the saddles are mounted adjacent each other on the mounting plate;
characterised in that each of the saddles comprises an upper element and a lower element, the upper element and the lower element being connectable together; the upper elements being mountable to a first conduit and a second conduit of an emissions cleaning module by means of the adjustable straps which pass through the saddles between the upper and lower element and the lower elements being mountable to the mounting plate.

### Brief description of the drawings

Embodiments of the present disclosure will now be described, by way of example only, with reference to the accompanying drawings in which:
Figure 1 shows a perspective view of an emissions cleaning module;

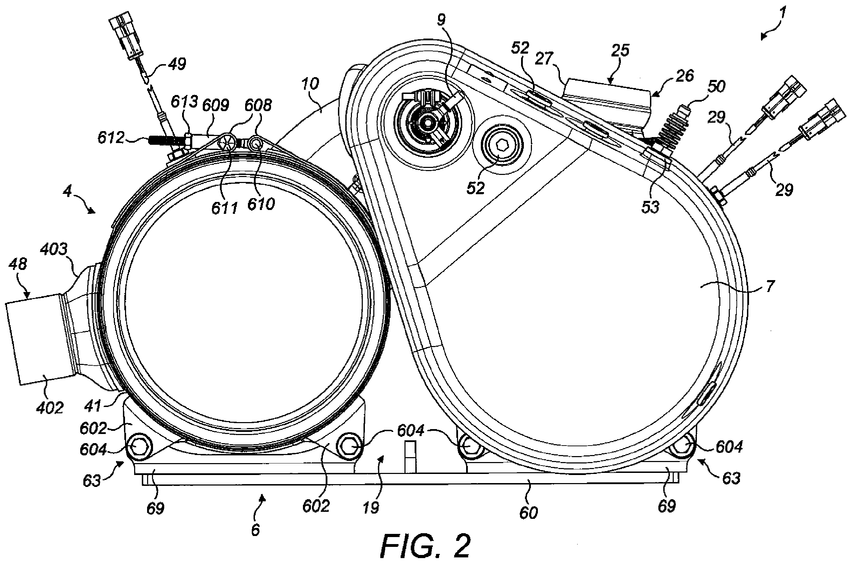

Figure 2 shows an end elevation the emissions cleaning module of Figure 1;

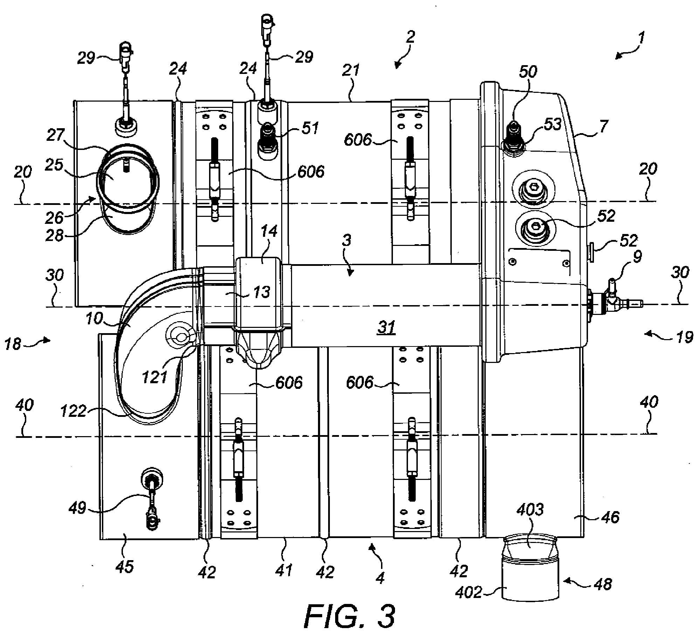

Figure 3 shows a plan view of the top of the emissions cleaning module of Figure 1;
Figure 4 shows a partly exploded perspective view of the emissions cleaning module of Figure 1 from a further angle showing the flowhood removed from the end of the first and third conduits;
Figure 5 shows the partly exploded perspective view of the emissions cleaning module of Figure 4 from another angle;

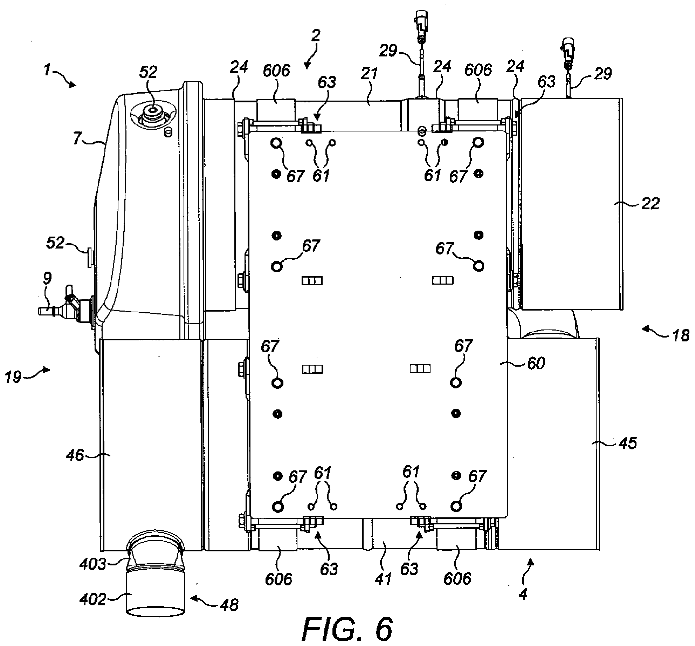

Figure 6 shows a plan view of the underside of the emissions cleaning module of Figure 1; and
Figure 7 shows a perspective view of part of a mounting mechanism of the emissions cleaning module of Figure 1.

### Detailed description

In the following description an embodiment of an emissions cleaning module 1 will be described and components of said emissions cleaning module 1 will be discussed. It is to be understood that, unless explicitly stated, the described features and components may be present in different combinations to provide other embodiments.

The emissions cleaning module 1 may comprise a plurality of exhaust gas treatment devices. In the following description reference will be made to the emissions cleaning module 1 comprising one or more of a diesel oxidation catalyst (DOC) module, a diesel particulate filter (DPF) module, a selective catalytic reduction (SCR) module and an AMOX module. It will be appreciated that the emissions cleaning module 1 may also contain any other exhaust gas treatment devices as known in the art.

A DOC module may comprise one or more catalysts, such as palladium or platinum, which may be in the form of catalyst bricks. These materials serve as catalysts to cause the oxidation of hydrocarbons ([HC]) and carbon monoxide (CO) present in the exhaust gas in order to produce carbon dioxide (CO₂ and water (H₂O) and the oxidization of nitrogen monoxide (NO) into nitrogen dioxide (NO₂). The catalysts may be distributed in a manner so as to maximise the surface area of catalyst material in order to increase effectiveness of the catalyst in catalysing reactions. The catalyst bricks are inherently variable in diameter., up to +/-2.5mm.

A DPF module may comprise a DPF which collects particulate matter, such as carbon in the form of soot, from the exhaust gas. The DPF may also include a catalyst or precious metal and washcoat to help the DOC with the oxidization of nitrogen monoxide (NO) into nitrogen dioxide (NO₂). The catalyst of the DPF may be coated on a substrate with a honeycomb or other elongated channel or thin wall structure. The DPF substrate may be more porous than the DOC substrate and every other channel may be blocked with half the channels blocked at the inlet end and half blocked at the outlet end. This increased porosity and the blocked channels encourage wall flow of the exhaust gas. The wall flow causes the soot to be filtered and collected in the DPF.

Like the DOC, different types of DPFs may be configured for different types of after treatment systems with different DPF regeneration strategies.
An SCR module may comprise one or more catalysts through which a mixture of exhaust gas and urea/ammonia may flow. As the mixture passes over the surfaces of the catalyst a reaction may occur which converts the ammonia and NOX to diatomic nitrogen (N₂) and water (H₂O).

An AMOX module may comprise an oxidation catalyst which may cause residual ammonia present in the exhaust gas to react to produce nitrogen (N₂) and water (H₂O).

The emissions cleaning module 1 comprises a first conduit 2, a second conduit 4, and a third conduit 3. The first conduit 2 may be elongate and have a longitudinal axis 20 defining its axis of elongation. The second conduit 4 may be elongate and have a longitudinal axis 30 defining its axis of elongation. The third conduit 3 may be elongate and have a longitudinal axis 40 defining its axis of elongation. The first conduit 2, second conduit 4 and third conduit 3 may be arranged parallel to one another such that the longitudinal axes 20, 40, 30 are parallel to one another. The emissions cleaning module 1 may have a first end 18 and a second end 19.

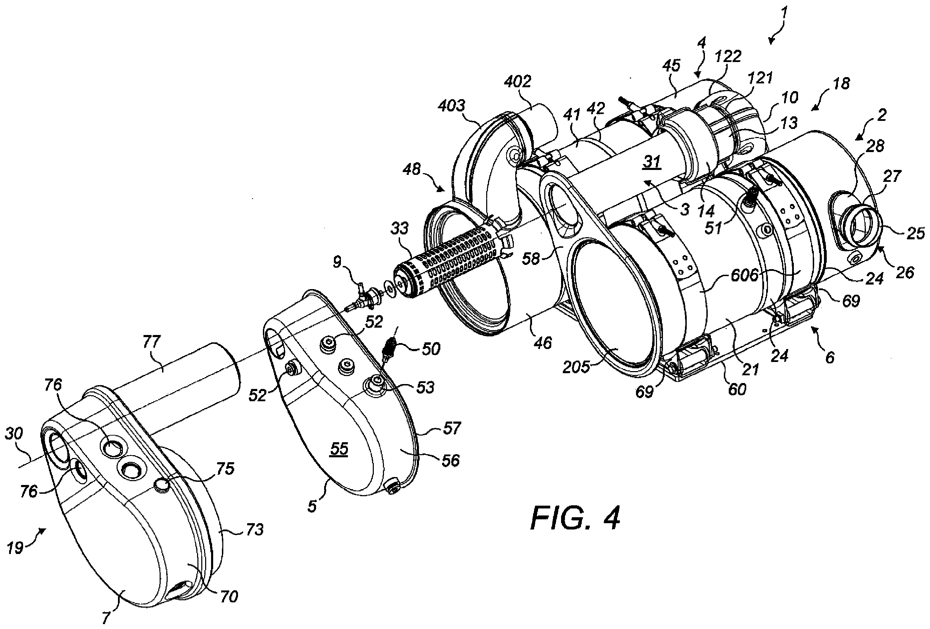

The first conduit 2 may comprise a cylindrical body 21. An inlet connector 26 may be mounted to an inlet end 22 of the cylindrical body 21 nearest the first end 18 of the emissions cleaning module 1. The inlet connector 26 may comprise a flared section 28 that is mounted to the cylindrical body 21 and which may taper to join with a mounting pipe 27 which may define an inlet 25 of the first conduit 2. In use, a conduit carrying exhaust gas may be connected to the mounting pipe 27. An end of the cylindrical body 21 nearest the second end 19 of the emissions cleaning module 1 may define an outlet 205 of the first conduit 2 (see Figure 4).

The cylindrical body 21 may comprise ridges 24, which may lie proud of a remainder of the cylindrical body 21 and which may be spaced along the longitudinal axis 20. One ridge 24 may be located nearest the first end 18. Another ridge 24 may be located nearest the second end 19. A further ridge 24 may be located in between the other two ridges 24.

The first conduit 2 may house a diesel oxidation catalyst (DOC) module (not shown). The DOC module may comprise one or more DOC elements which may be configured differently. For example a different catalytic treatment may be applied to each element. The DOC module may be located in a first portion of the first conduit 2 towards the inlet 25.

The first conduit 2 may also house a diesel particulate filter (DPF) module (not shown). The DPF module may be located in a second portion of the first conduit 2 towards the outlet 205 of the first conduit 2.

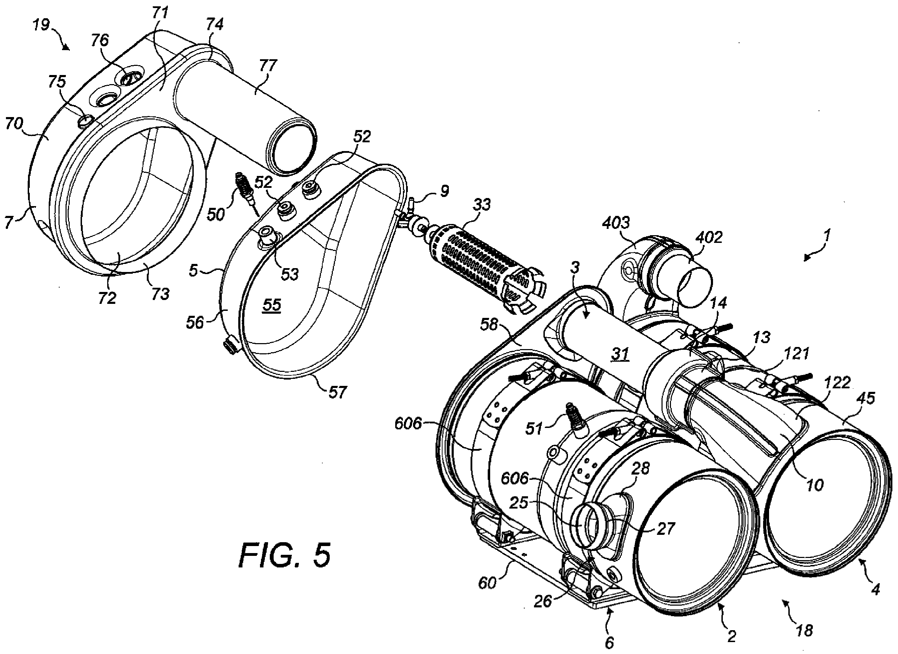

The outlet 205 of the first conduit 2 may be fluidly connected to an inlet end of the third conduit 3 by a flowhood 5. The flowhood 5 (see Figures 4 and 5) may comprise a rear wall 55 with a sidewall 56 extending therefrom. A flowhood flange 57 may extend outwardly from the free edge of the sidewall 56. A plate 58 defining a lower aperture and an upper aperture, may be provided to support, respectively, an outlet end of the first conduit 2 and an inlet end of the third conduit 3. The aforesaid ends of the first and third conduits 2,3 may be welded, or otherwise attached, in said lower and upper apertures. The flowhood flange 57 may be welded, or otherwise attached, to the plate 58. The flowhood 5 may be generally tapered so that it is wider at a lower end, which is located over the outlet end of the first conduit 2, and narrower at an upper end, which is located over the inlet end of the third conduit 3.

A flowhood cover 7 may be provided to reduce the transmission of thermal emissions to the surroundings of the emissions cleaning module 1. The flowhood cover 7 may also act to help maintain an elevated temperature within portions of the emissions cleaning module 1. The flowhood cover 7 may be designed to substantially fully envelop all external surfaces of the flowhood 5. In addition, the flowhood cover 7 may be configured to envelop at least a portion of the cylindrical body 31 of the third conduit 3. In addition, the heat shield may be configured to envelop at least a portion of the cylindrical body 21 of the first conduit 2 near where it is connects to the flowhood 7.

The flowhood cover 7 may therefore comprise a first section 70 and a second section 71 which may be joined together, for example by welding. The second section 71 may have a first aperture 72 which may be surrounded by a first flange 73. The first flange 73 may located around the outlet end of the first conduit 2. The second section 71 may have a second aperture 74, from which a cylindrical tube 77 projects. When assembled, the cylindrical tube extends through the over the third conduit 31.

The emissions cleaning module 1 may comprise one or more sensors for determining one or more conditions in the emissions cleaning module 1, such as temperature, soot level in the DPF or quantity of NOₓ. Each sensor may at least partially penetrate a conduit 2, 3, 4 or the flowhood 7 of the emissions cleaning module 1, such that those elements of the sensor (i.e. electronic components) which need not be located within a volume to be sensed may be located on an exterior surface of the emissions cleaning module 1. In this manner, sensitive elements of the sensors can be located away from high temperatures likely to occur inside the conduit. The sensors may be arranged such that those elements of the sensors located on the exterior surface of the emissions cleaning module 1 may be located in a manner which allows for increased air flow. This may help to reduce damage to the sensors which might otherwise be caused due to heat.

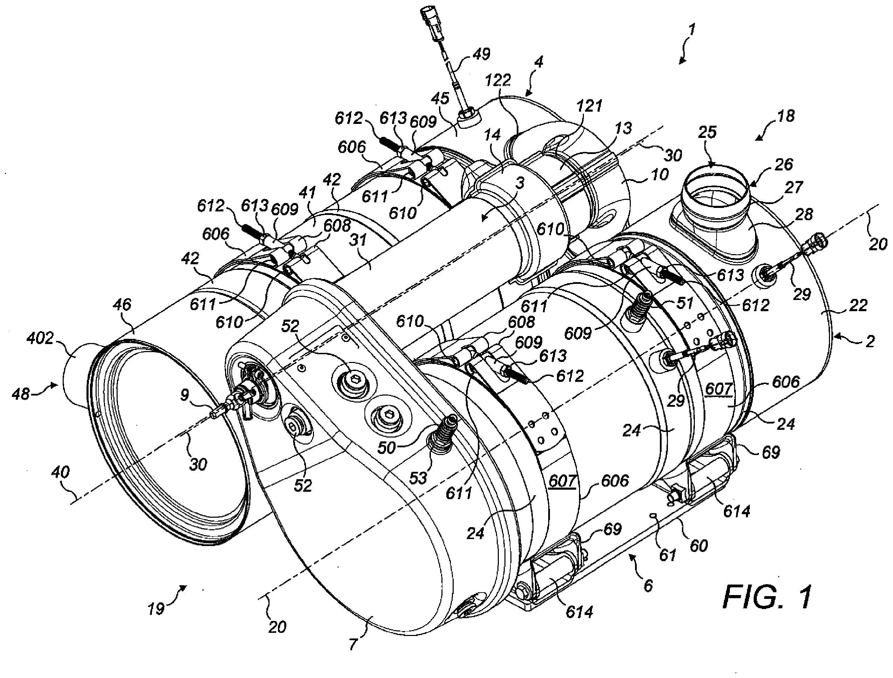

Two temperature sensors 29 may be mounted in the first conduit 2 to measure the temperature of the exhaust gas within the first conduit 2. The temperature sensors 29 may extend into an interior of the first conduit 2 such that a distal end of the temperature sensor 29 may lie on or in proximity to the longitudinal axis 20 of the first conduit 2. The temperature sensors 29 may be mounted so as to measure the temperature of the exhaust gas on entry into the DOC module and on exit from the DOC module, prior to its passage through the DPF module. A first temperature sensor 29 is therefore mounted in the inlet end 22 of the first conduit 2 close to the inlet connector 26. A second temperature sensor 29 may be mounted part way along the first conduit 2 as shown in Figure 1. The temperature sensors 29 may be connected to an external engine control module (not shown), by means of suitable temperature sensor leads.

A soot sensor 50,51 may be provided to determine the soot loading in the DPF of the DPF module. The soot sensor 50,51 may be an RF sensor which utilises radio frequency technology to determine the accumulated soot in the DPF and transmit the measurements to the control module. The soot sensor 50, 51 may comprise a transmitter 51 and a receiver 50 mounted in the first conduit 2 on either side of the DPF and configured to transmit and receive, respectively, radio frequency signals through the DPF. Each of the transmitter 51 and receiver 50 may include an antenna capable of either transmitting or receiving RF signals passed through the DPF. An RF soot sensor monitor (not shown) may be configured to receive signals from the transmitter 51 and receiver 50 and output signals to the engine control module which are indicative of an attenuation of RF signals transmitted through the DPF, which may be indicative of a relative soot loading state of the DPF. One of the receiver 50 or transmitter 51 may be mounted in a boss 53, which is itself mounted in the sidewall 56 of the flowhood 5 between the first and third conduits 2, 3. The boss 53 on the receiver 50 or transmitter 51 thus mounted may extend through an aperture 75 in the first section 70 of the flowhood cover 7.

A NOₓ sensor may also be provided to measure the quantity of NOₓ in the exhaust gas after it has passed through the DOC and DPF modules in the first conduit 2 and before it enters the SCR module in the second conduit 4. The NOₓ sensor may therefore be mounted in the flowhood 7 between the first and third conduits 2, 3. The NOₓ sensor may be mounted in a boss 52. A choice of two locations for the boss 52 is shown in the Figures, on the side or rear wall 56,55 of the flowhood 5. The use of a boss 52 allows the tip of the NOₓ sensor to be located in a region of higher flow of the exhaust gas. If the NOₓ sensor tip is located in a larger volume, i.e. further within the volume of the flowhood 5, the velocity of flow across the NOₓ sensor tip may not be sufficient to provide an accurate measurement. The boss 52, and therefore the NOₓ sensor, extends through an aperture 76 in the first section 70 of the flowhood cover 7.

The third conduit 3 may house a mixer module. The mixer module may be configured to mix a reductant fluid, such as ammonia or urea, injected by an injector module 9 with the exhaust gas passing from the first conduit 2. The third conduit 3 may comprise a cylindrical body 31 defining a mixing chamber in which a mixing element 33 may be located.
The injector module 9 may be mounted in an aperture in the rear wall 55 in the flowhood 5 so as to extend into the mixer module. The injectore module 9 may extend through an aperture in the flowhood cover 7. One or more injector lines may interconnect the injector module 9 with a supply of injector fluid.

A flow connector 10 may be provided to fluidly connect an outlet end 310 of the third conduit 3 with an inlet end of the second conduit 4. As shown in Figure 1, the flow connector 10 may have an elbow-shaped configuration wherein a first end 121 of the flow connector 10 is aligned with the cylindrical body 31. A second end 122 of the flow connector 10 is oriented at approximately 90° to the first end 121 so as to connect to the second conduit 4 in a direction perpendicular to the longitudinal axis 40 of the second conduit 4. The flow connector 10 may have a double skin construction comprising an outer wall and an inner wall. A gap between the outer wall and inner wall may be provided as a void space or may alternatively be filled with an insulating material.

The cylindrical body 31 of the third conduit 3 may be connected to the first end 121 of the flow connector 10 by means of a ring 13 and clamp 14. An end of the cylindrical body 31 defining an outlet end 310 of the third conduit 3 may be received in a first end of the ring 13 and a second end of the ring 13 may be mounted on the first end 121 of the flow connector 10. A clamp 14 may be provided to clamp the ring 13 to the cylindrical body 31 of the third conduit 3. The clamp 14 may be of a type whose diameter may be adjusted by a suitable mechanism. An example of a suitable clamp is a Teconnex™ clamp. Additional fastening means, such as welding, may be provided between the ring 13 and the cylindrical body 31 if desired. The ring 13 may be fastened to the flow connector 10 by means of a suitable fastening mechanism such as, for example, welding.

The second conduit 4 may comprise a cylindrical body 41. A first end section 45 may be sealingly connected to the cylindrical body 41 at an end of the cylindrical body 41 nearest the first end 18 of the emissions cleaning module 1. A second end section 46 may be sealingly connected to the cylindrical body 41 at an end of the cylindrical body 41 nearest the second end 19 of the emissions cleaning module 1.

The first end section 45 may define a closed first end of the second conduit 4. The flow connector 10 may be fluidly connected to the first end section 45. The second end section 46 may be provided with an outlet connector 48 defining an outlet of the second conduit 4. The outlet connector 48 may comprise a conical section 403 that may be mounted to the second end section 46 and which may taper to join with a cylindrical mounting pipe 402 which is connected to the second conduit 4. In use, a section of external pipe work forming a portion of an exhaust arrangement may be connected to the cylindrical mounting pipe 402.

The cylindrical body 41 may comprise ridges 42 which may lie proud of a remainder of the cylindrical body 41 and which may be spaced along the longitudinal axis 40. One ridge 42 may be located nearest the first end 18. Another ridge 42 may be located nearest the second end 19. A further ridge 42 may be located in between the other ridges 42.

The second conduit 4 may contain an SCR module. The SCR module may be located within the cylindrical body 41 towards the first end 18 of the emissions cleaning module 1. The second conduit 4 may also contain an AMOX module. The AMOX module may be located within the cylindrical body 41 towards the second end 19 of the emissions cleaning module 1 so as to be downstream of the SCR module.

A temperature sensor 49 may be mounted in the second conduit 4. The temperature sensor 49 may be mounted in the first end section 45. The temperature sensor 49 may be located immediately upstream of the SCR module. The temperature sensor 49 may extend into an interior of the second conduit 4. The temperature sensor 49 may be connected to the engine control module by means of a suitable temperature sensor lead.

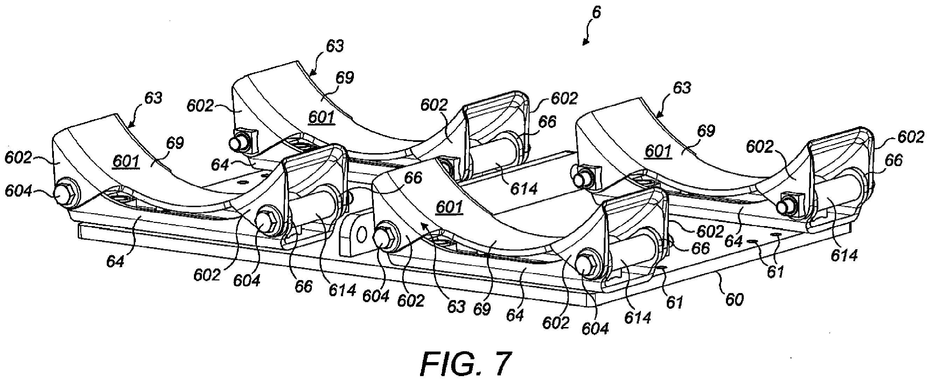

A mounting mechanism 6 may be provided for mounting the emissions cleaning module 1 to an external support or mount, for example a chassis. The mounting mechanism 6 provides a means for mounting one or both of the first conduit 2 and the second conduit 4 to the external support or mount. The mounting mechanism comprises one or more mounting saddles 63. As shown in Figure 7, the mounting mechanism 6 may comprise a mounting plate 60 having at least one pair of mounting saddles 63 fastened thereto. The arrangement of the mounting saddles 63 on the mounting plate 60 may be such that the first conduit 2 and the second conduit 4 are mounted adjacent to each other. The arrangement may also be such that the first conduit 2 and the second conduit 4 are mounted parallel to each other.

The mounting saddle 63 may be designed to distort in order to conform to the cylindrical body 41 of the conduit 2, 4 mounted thereon. This may reduce stress in the mounting mechanism 6 and improve retainment (i.e. increase natural frequency) of the first and/or second conduits 2, 4 on the mounting plate 60. The mounting saddle 63 may have an upper surface 601 for supporting the conduit 2,4. The upper surface 601 is flexible so as to conform substantially to a portion of the conduit 2,4 located thereon.

The mounting saddle 63 may comprise a lower element 64 and an upper element 69. The lower element 64 may comprise upwardly extending flanges 66 on each side. Bolt holes 67 may be provided for fastening the lower elements 64 to the mounting plate 60 by means of bolts.

The flanges 66 of the lower element 64 may each have an enlarged lobe section at each end in each of which may be formed a hole. Thus each lower element 64 may have two pairs of holes.

The upper element 69 of each mounting saddle 63 may comprise said curved upper surface 601 which is configured to conform substantially to a portion of the cylindrical body 41 of the first and second conduits 2, 4, which may or may not be the same The upper surface 601 may be shaped to conform substantially to a portion of the cylindrical body 41 of the first and second conduits 2, 4. The upper element 69 may be provided with a pair of flanges 602 at each end which extend downwardly and may have formed therein holes. As shown in Figure 7, the upper elements 69 may thus be mounted to the lower element 64 by means of fastening means 604 , such as bolts, which may pass through the pairs of holes and in the lower element 64 and upper element 69 respectively. The mounting saddle may be provided with cylindrical spacers 614 overlying the fastening means 604 which may extend between the flanges 66. The cylindrical spacers 614 may act to strengthen the lower elements 64 and help restrict distortion when the fastening means 604 are tightened. The holes may be circular or slotted.

The mounting mechanism 6 may further comprise an adjustable strap 606 associated with each mounting saddle 63. The mounting mechanism 6 may comprise two pairs of adjustable straps 606. A first pair of adjustable straps 606 may extend around the cylindrical body 41 of the first conduit 2 and pass through a first pair of mounting saddles 63 between the lower element 64 and the upper element 69. The second pair of adjustable straps 606 may extend around the cylindrical body 41 of the second conduit 4 and pass through the second pair of mounting saddles 63 between the lower element 64 and the upper element 69. Each adjustable strap 606 may comprise an elongate member 607 which may be formed from a metal band. The adjustable straps 606 may be located between pairs of ridges 42 on the cylindrical body 41 or pairs of ridges 24 on cylindrical body 21.

At each end of the elongate member 607, a pair of end loops 608 may be formed which may receive co-operating portions of an adjustable clamp 609. Each adjustable clamp 609 may comprise a first fixing 610 received in a pair of end loops 608 at one end of the elongate member 607 and a second fixing 611 received in the pair of end loops 608 at the other end of the elongate member 607. A threaded connector 612 may be provided which may be mounted to the first fixing 610 and extend through an aperture in the second fixing 611. A nut adjuster 613 may be received on the threaded connector 612 and by movement of the nut adjuster 613 along the threaded connector 612, the distance between the co-operating portions may be adjusted and hence the circumference of the adjustable strap 606 may be adjusted.

As the adjustable strap 606 is tightened around the cylindrical body 41 or the conduit 2,3, the upper surface 601 flexes to conform to the portion of the conduit 2,4 located thereon. The fastening means may then be tightened to hold the upper surface 601 rigid. This configuration may enable one or more conduits 2,4 having different curvatures to be securely supported.

The mounting plate 60 may be provided with bolt holes 61 for receiving fastening means such as bolts for mounting the mounting plate 60 to the external support.

### Industrial Applicability

In use, the emissions cleaning module 1 may be mounted to a chassis, or similar external support, by use of the mounting mechanism 6. A conduit originating from a source of exhaust gas, for example a diesel combustion engine, may be connected to the mounting pipe 27. A section of external pipe work forming a portion of an exhaust arrangement may be connected to the mounting pipe 402 of the second conduit 4.

During operation exhaust gas may be supplied to the emissions cleaning module 1 via the inlet 25. The temperature of the incoming exhaust gas may be sensed as it passes through the inlet connector 26 by the temperature sensor 29 and the information transmitted to an external processing unit.

The exhaust gas may then pass into the DOC module in the first conduit 2. Prior to receipt at the inlet 25, the pressure of the exhaust gas may be controlled by a back pressure valve. The DOC module may function to cause oxidation of hydrocarbons ([HC]) and carbon monoxide (CO) present in the exhaust gas to produce carbon dioxide (CO₂) and water (H₂O).

The exhaust gas may then pass into the DPF module in the first conduit 2. In the DPF module, carbon particles (C) in the form of soot in the exhaust gas are trapped in the DPF as the exhaust gas passes there through. The soot sensor 50,51 monitors the soot levels in the DPF, such that the engine control module may command operation of a regeneration process responsive to a soot loading state of the DPF. The location of one of the components of the soot sensor 50,51 in the flowhood 5 may enable the length of the first conduit 2 to be shorter than if it were located in the first conduit 2 itself. This may enable the overall length of the emissions cleaning module 1 to be reduced in length.

The temperature within the DPF module may affect the extent to which RF energy is attenuated when transmitted through the DPF containing trapped soot. In general, the attenuation is negatively correlated with temperature, and thus the engine control module may be configured to determine a relative soot loading state of the DPF also in response to inputs from the temperature sensors 29.

The temperature of the exhaust gas in the DPF module may also be used to trigger a DPF regeneration process.

The exhaust gas may then pass through the outlet 205 of the first conduit 2 into the flowhood 5. The exhaust gas may then be channelled by the flowhood 5 around towards the inlet of the third conduit 3.

A reductant fluid, such as urea or ammonia, may be injected by the injector module 9 into mixing element and thus into the flow of exhaust gas. The patterns of fluid flow which may be induced in the exhaust gas by the mixing element 33 may promote mixing of the injected fluid with the exhaust gas. Such mixing may promote heat transfer from the relatively hot exhaust gas to the injected fluid which may promote conversion of the urea, where used, to ammonia. Such mixing may also produce a more uniform mixture of the injected fluid within the exhaust gas.

As the exhaust gas passes through the flowhood 5, the NOₓ level in the exhaust gas is monitored by the NOₓ sensor. The measurement of NOₓ may be used to determine the level of reductant fluid injected by the injector module 9. For example, during engine idle conditions, the injection of reductant fluid may be reduced for at least partially suspended because lower amounts of reductant fluid are needed when low levels of NOₓ are produced by the engine. During non-idle engine conditions, higher levels of NOₓ are produced, so a greater level of reductant fluid is required.

The mixture of the exhaust gas and the injected reductant fluid may then pass along the third conduit 3 via a swirl unit, where present. The swirl unit may induce a swirling motion into the flow of fluid, which may promote greater uniformity in concentration of the injected fluid within the exhaust gas. The swirl unit is an optional component.

Fluid may then pass via the flow connector 10 into the second conduit 4 and through the SCR module contained therein. The temperature of the fluid entering the second conduit 4 may be sensed by the temperature sensor 49 and the information transmitted to the control module. The operation of the SCR module is sensitive to temperature. The measurement of the temperature of the fluid may therefore be used by the engine control module to thermally manage the operation of the SCR module.

As the fluid passes over the surfaces of the catalyst within the SCR module a reaction may occur which converts the ammonia and NOₓ to diatomic nitrogen (N₂) and water (H₂O).

Fluid may then pass from the SCR module to the AMOX module, where present, located further downstream in the second conduit 4. The AMOX module may function to cause any residual ammonia present in the exhaust gas to react to produce nitrogen (N₂) and water (H₂O).

From the AMOX module the fluid may pass out of the outlet via the outlet connector 48 and into the external pipework.

## Claims

1. An emissions cleaning module (1) comprising:
a conduit (2) ; and
a mounting mechanism (6) for mounting the emissions cleaning module (1) to an external support;
said mounting mechanism (6) comprising:
at least one adjustable strap (606) which is clamped around the conduit (2); and
at least one saddle (63) which is mounted to the conduit (2) by the at least one adjustable strap (606);
wherein the at least one saddle (63) comprises a curved upper surface (601) configured to conform substantially to a portion of the conduit (2);
**characterised in that** the at least one saddle (63) comprises an upper element (69) and a lower element (64), the upper element (69) and the lower element (64) being connectable together; the upper element (69) being retained to the conduit (2) respectively by means of one of the at least one adjustable strap (606) which passes through the at least one saddle (63) between the upper and lower elements (69, 64).

2. An emissions cleaning module (1) comprising:
a first conduit (2) containing a diesel oxidation catalyst (DOC) module and a diesel particulate filter (DPF) module ;
a second conduit (4) containing a selective catalytic reduction (SCR) module; and
a mounting mechanism (6) for mounting the emissions cleaning module (1) to an external support;
said mounting mechanism (6) comprising:
at least one adjustable strap (606) which is clamped around each conduit (2, 4); and
at least one saddle (63) which is mounted to each conduit (2, 4) by the at least one adjustable strap (606);
wherein the first and second conduits (2, 4) are mounted adjacent one another on the mounting mechanism (6) and the at least one saddle (63) comprises a curved upper surface (601) configured to conform substantially to a portion of the conduit (2, 4); **characterised in that** the at least one saddle (63) comprises an upper element (69) and a lower element (64), the upper element (69) and the lower element (64) being connectable together; the upper element (69) being retained to the conduit (2, 4) respectively by means of one of the at least one adjustable strap (606) which passes through the at least one saddle (63) between the upper and lower elements (69, 64).

3. An emissions cleaning module (1) as claimed in claim 1 or claim 2 wherein the upper surface (601) is flexible.

4. An emissions cleaning module (1) as claimed in any one of the preceding claims, wherein the upper element (69) and the lower element (64) are connected together by one or more fastening means.

5. An emissions cleaning module (1) as claimed in any one of the preceding claims further comprising a mounting plate (60) to which the at least one saddle (63) is mounted, the lower element (64) being retained to the mounting plate (60).

6. An emissions cleaning module (1) as claimed in claim 1 further comprising a first conduit (2) containing a diesel oxidation catalyst (DOC) module and a diesel particulate filter (DPF) module and a second conduit (4) containing a selective catalytic reduction (SCR) module.

7. An emissions cleaning module (1) as claimed in claim 6 wherein the first and second conduits (2, 4) are mounted adjacent one another on the mounting plate (60).

8. An emissions cleaning module (1) as claimed in claim 7 wherein the first and second conduits (2, 4) are mounted parallel to one another on the mounting plate (60).

9. An emissions cleaning module (1) as claimed in any one of claims 6 to 8 wherein the mounting mechanism (6) comprises at least one adjustable strap (606) clamped around each of the first and second conduits (2, 4) and at least one saddle (63) which is mounted to each of the first and second conduits (2, 4) by the adjustable straps (606).

10. An emissions cleaning module (1) as claimed in claim 2 or claim 6, further comprising a third conduit (3) containing a mixing element and a flowhood (5) having an inlet fluidly connected to an outlet (205) of the first conduit (2) and an outlet fluidly connected to an inlet of the second conduit (3).

11. An emissions cleaning module (1) as claimed in claim 10 further comprising a soot sensor (50, 51) configured to determine an amount of soot in a DPF of the DPF module, said soot sensor being an RF sensor having a transmitter (51) and a receiver (50) located at opposing ends of the DPF.

12. An emissions cleaning module (1) as claimed in claim 11 wherein one of the transmitter (51) and receiver (50) is mounted in the first conduit (2) at an inlet end of the DPF module and the other of the transmitter (51) and receiver (50) is mounted in the flowhood (5).

13. An emissions cleaning module (1) as claimed in any one of claims 10 to 12 further comprising a NOₓ sensor located to determine a quantity of NOₓ in exhaust gas flowing through the emissions cleaning module (1) before it passes into the SCR module.

14. An emissions cleaning module (1) as claimed in claim 13 wherein said NOₓ sensor is mounted in the flowhood (5).

15. An emissions cleaning module (1) as claimed in claim 13 or claim 14 in which the NOₓ sensor is mounted in a boss (52), which is mounted in the flowhood (5).

16. A mounting mechanism for an emissions cleaning module (1) comprising:
at least a pair of adjustable straps (606);
at least a pair of saddles (63); and
a mounting plate (60);
wherein each of the saddles (63) comprise a curved upper surface (601) configured to conform substantially to a portion of a conduit (2, 4) and the saddles (63) are mounted adjacent each other on the mounting plate (60);
**characterised in that** each of the saddles (63) comprises an upper element (69) and a lower element (64), the upper element (69) and the lower element (64) being connectable together; the upper elements (69) being mountable to a first conduit (2) and a second conduit (4) of an emissions cleaning module (1) by means of the adjustable straps (606) which pass through the saddles (63) between the upper and lower element (69, 64) and the lower elements (64) being mountable to the mounting plate (60).

17. A mounting mechanism for an emissions cleaning module (1) as claimed in claim 16 in which the upper surfaces (601) are flexible.

## Patentansprüche

1. Emissionsreinigungsmodul (1) umfassend:
eine Leitung (2); und
einen Montagemechanismus (6) zum Montieren des Emissionsreinigungsmoduls (1) an einen externen Träger;
wobei der Montagemechanismus (6) umfasst:
zumindest einen einstellbaren Riemen (606), der um die Leitung (2) herum gespannt ist; und
zumindest einen Sattel (63), der an die Leitung (2) mittels des zumindest einen einstellbaren Riemens (606) montiert ist;
wobei der zumindest eine Sattel (63) eine gekrümmte obere Oberfläche (601) umfasst, die ausgestaltet ist, sich im Wesentlichen an einen Abschnitt der Leitung (2) anzupassen;
**dadurch gekennzeichnet, dass** der zumindest eine Sattel (63) ein oberes Element (69) und ein unteres Element (64) umfasst, wobei das obere Element (69) und das untere Element (64) miteinander verbindbar sind; wobei das obere Element (69) entsprechend an der Leitung (2) mittels einem von dem zumindest einen einstellbaren Riemen (606), der durch den zumindest einen Sattel (63) zwischen dem oberen und unteren Elementen (69, 64) hindurchläuft, gehalten wird.

2. Emissionsreinigungsmodul (1), umfassend:
eine erste Leitung (2), die ein Dieseloxidationskatalysator (DOC) -Modul und ein Dieselpartikelfilter (DPF) -Modul enthält;
eine zweite Leitung (4), die ein selektives katalytisches Reduktions (SCR) - Modul; und einen Montagemechanismus (6) zum Montieren des Emissionsreinigungsmoduls (1) an einen externen Träger enthält;
wobei der Montagemechanismus (6) umfasst:
zumindest einen einstellbaren Riemen (606), der um jede Leitung (2, 4) herum gespannt ist;
und
zumindest einen Sattel (63), der an jede Leitung (2, 4) mittels dem zumindest einen einstellbaren Riemen (606) montiert ist;
wobei die erste und zweite Leitungen (2, 4) aneinander angrenzend an dem Montagemechanismus (6) montiert sind und wobei der zumindest eine Sattel (63) eine gekrümmte obere Oberfläche (601) umfasst, die ausgestaltet ist, sich im Wesentlichen an einen Abschnitt der Leitungen (2, 4) anzupassen;
**dadurch gekennzeichnet, dass** der zumindest eine Sattel (63) ein oberes Element (69) und ein unteres Element (64) umfasst, wobei das obere Element (69) und das untere Element (64) miteinander verbindbar sind; wobei das obere Element (69) entsprechend an der Leitung (2, 4) mittels einem von dem zumindest einen einstellbaren Riemen (606), der durch den zumindest einen Sattel (63) zwischen dem oberen und unteren Elementen (69, 64) hindurch verläuft, gehalten wird.

3. Emissionsreinigungsmodul (1) wie beansprucht in Anspruch 1 oder Anspruch 2, wobei die obere Oberfläche (601) flexibel ist.

4. Emissionsreinigungsmodul (1) wie beansprucht in einem der vorhergehenden Ansprüche, wobei das obere Element (69) und das untere Element (64) mittels einem oder mehrerer Befestigungsmittel miteinander verbunden sind.

5. Emissionsreinigungsmodul (1) wie beansprucht in einem der vorherigen Ansprüche, ferner umfassend eine Montageplatte (60), an die der zumindest eine Sattel (63) montiert ist, wobei das untere Element (64) an der Montageplatte (60) gehalten wird.

6. Emissionsreinigungsmodul (1) wie beansprucht in Anspruch 1, ferner umfassend eine erste Leitung (2), die ein Dieseloxidationskatalysator (DOC) -Modul und ein Dieselpartikelfilter (DPF) -Modul und eine zweite Leitung (4), die ein selektives katalytisches Reduktions (SCR) -Modul enthält, enthält.

7. Emissionsreinigungsmodul (1) wie beansprucht in Anspruch 6, wobei die erste und zweite Leitungen (2, 4) aneinander angrenzend an der Montageplatte (60) montiert sind.

8. Emissionsreinigungsmodul (1) wie beansprucht in Anspruch 7, wobei die erste und zweite Leitungen (2, 4) parallel zueinander an der Montageplatte (60) montiert sind.

9. Emissionsreinigungsmodul (1) wie beansprucht in einem der Ansprüche 6 bis 8, wobei der Montagemechanismus (6) zumindest einen einstellbaren Riemen (606) umfasst, der um jede der ersten und zweiten Leitungen (2, 4) und zumindest einem Sattel (63), der an jede der ersten und zweiten Leitungen (2, 4) mittels der einstellbaren Riemen (606) montiert ist, herum gespannt ist.

10. Emissionsreinigungsmodul (1) wie beansprucht in Anspruch 2 oder Anspruch 6, ferner umfassend eine dritte Leitung (3), die ein Mischelement und eine Strömungshaube (5) umfasst, die einen Einlass aufweist, der mit einem Auslass (205) der ersten Leitung (2) fluidisch verbunden ist und einen Auslass, der mit einem Einlass der zweiten Leitung (3) fluidisch verbunden ist.

11. Emissionsreinigungsmodul (1) wie beansprucht in Anspruch 10, ferner umfassend einen Rußsensor (50, 51), der ausgebildet ist, eine Menge von Ruß in einem DPF des DPF-Moduls zu bestimmen, wobei der Rußsensor ein RF-Sensor ist, der einen Sender (51) und einem Empfänger (50) aufweist, die an gegenüberliegenden Enden des DPF angeordnet sind.

12. Emissionsreinigungsmodul (1) wie beansprucht in Anspruch 11, wobei einer der Sender (51) und Empfänger (50) in der ersten Leitung (2) an einem Einlassende des DPF-Moduls montiert ist und der Andere des Senders (51) und Empfängers (50) in der Strömungshaube (5) montiert ist.

13. Emissionsreinigungsmodul (1) wie beansprucht in einem der Ansprüche 10 bis 12, ferner umfassend einen NOₓ-Sensor, der angeordnet ist, eine Mengen von NOₓ in Abgas zu bestimmen, das durch das Emissionsreinigungsmodul (1) strömt, bevor es in das SCR-Modul eintritt.

14. Emissionsreinigungsmodul (1) wie beansprucht in Anspruch 13, wobei der NOₓ-Sensor in der Strömungshaube (5) montiert ist.

15. Emissionsreinigungsmodul (1) wie beansprucht in Anspruch 13 oder Anspruch 14, wobei der NOₓ-Sensor in einem Knauf (52) montiert ist, der in der Strömungshaube (5) montiert ist.

16. Montagemechanismus für ein Emissionsreinigungsmodul (1), umfassend:
zumindest ein Paar einstellbarer Riemen (606);
zumindest ein Paar Sättel (63); und
eine Montageplatte (60);
wobei jeder der Sättel (63) eine gekrümmte obere Oberfläche (601) umfasst, die ausgestaltet ist, sich im Wesentlichen an einen Abschnitt einer Leitung (2, 4) anzupassen und wobei die Sättel (63) aneinander angrenzend an der Montageplatte (60) montiert sind;
**dadurch gekennzeichnet, dass** jeder der Sättel (63) ein oberes Element (69) und ein unteres Element (64) umfassen, wobei das obere Element (69) und das untere Element (64) miteinander verbindbar sind; wobei die oberen Elemente (69) an eine erste Leitung (2) und eine zweite Leitung (4) eines Emissionsreinigungsmoduls (1) mittels der einstellbaren Riemen (606) montierbar sind, die durch die Sättel (63) zwischen dem oberen und unteren Element (69, 64) hindurchlaufen, und wobei die unteren Elemente (64) an die Montageplatte (60) montierbar sind.

17. Montagemechanismus für ein Emissionsreinigungsmodul (1) wie beansprucht in Anspruch 16, wobei die oberen Oberflächen (601) flexibel sind.

## Revendications

1. Module de purification d'émissions (1) comprenant :
un conduit (2) ; et
un mécanisme de montage (6) pour monter le module de purification d'émissions (1) sur un support externe ;
ledit mécanisme de montage (6) comprenant :
au moins une courroie réglable (606) qui est serrée autour du conduit (2) ; et
au moins un sabot (63) qui est monté sur le conduit (2) par l'au moins une courroie réglable (606) ;
dans lequel l'au moins un sabot (63) comprend une surface supérieure incurvée (601) configurée pour se conformer sensiblement à une partie du conduit (2) ;
**caractérisé en ce que** l'au moins un sabot (63) comprend un élément supérieur (69) et un élément inférieur (64), l'élément supérieur (69) et l'élément inférieur (64) pouvant être reliés ensemble ; l'élément supérieur (69) étant retenu au conduit (2) respectivement au moyen d'une de l'au moins une courroie réglable (606) qui passe à travers l'au moins un sabot (63) entre les éléments supérieur et inférieur (69, 64).

2. Module de purification d'émissions (1) comprenant :
un premier conduit (2) contenant un module catalyseur d'oxydation diesel (DOC) et un module filtre à particules diesel (DPF) ;
un deuxième conduit (4) contenant un module de réduction catalytique sélective (SCR) ; et
un mécanisme de montage (6) pour monter le module de purification d'émissions (1) sur un support externe ;
ledit mécanisme de montage (6) comprenant :
au moins une courroie réglable (606) qui est serrée autour de chaque conduit (2, 4) ; et
au moins un sabot (63) qui est monté sur chaque conduit (2, 4) par l'au moins une courroie réglable (606) ;
dans lequel les premier et deuxième conduits (2, 4) sont montés adjacents l'un à l'autre sur le mécanisme de montage (6) et l'au moins un sabot (63) comprend une surface supérieure incurvée (601) configurée pour se conformer sensiblement à une partie du conduit (2, 4); **caractérisé en ce que** l'au moins un sabot (63) comprend un élément supérieur (69) et un élément inférieur (64), l'élément supérieur (69) et l'élément inférieur (64) pouvant être reliés ensemble ; l'élément supérieur (69) étant retenu au conduit (2, 4) respectivement au moyen d'une de l'au moins une courroie réglable (606) qui passe à travers l'au moins un sabot (63) entre les éléments supérieur et inférieur (69, 64).

3. Module de purification d'émissions (1) selon la revendication 1 ou la revendication 2 dans lequel la surface supérieure (601) est souple.

4. Module de purification d'émissions (1) selon l'une quelconque des revendications précédentes, dans lequel l'élément supérieur (69) et l'élément inférieur (64) sont reliés ensemble par un ou plusieurs moyens de fixation.

5. Module de purification d'émissions (1) selon l'une quelconque des revendications précédentes comprenant en outre une plaque de montage (60) à laquelle l'au moins un sabot (63) est monté, l'élément inférieur (64) étant retenu à la plaque de montage (60).

6. Module de purification d'émissions (1) selon la revendication 1 comprenant en outre un premier conduit (2) contenant un module catalyseur d'oxydation diesel (DOC) et un module de filtre à particules diesel (DPF) et un deuxième conduit (4) contenant un module de réduction catalytique sélective (SCR).

7. Module de purification d'émissions (1) selon la revendication 6 dans lequel les premier et deuxième conduits (2, 4) sont montés adjacents l'un l'autre sur la plaque de montage (60).

8. Module de purification d'émissions (1) selon la revendication 7 dans lequel les premier et deuxième conduits (2, 4) sont montés parallèles l'un à l'autre sur la plaque de montage (60).

9. Module de purification d'émissions (1) selon l'une quelconque des revendications 6 à 8 dans lequel le mécanisme de montage (6) comprend au moins une courroie réglable (606) serrée autour de chacun des premier et deuxième conduits (2, 4) et au moins un sabot (63) qui est monté sur chacun des premier et deuxième conduits (2, 4) par les courroies réglables (606).

10. Module de purification d'émissions (1) selon la revendication 2 ou la revendication 6, comprenant en outre un troisième conduit (3) contenant un élément de mélange et un capuchon de flux (5) ayant une entrée reliée à fluide à une sortie (205) du premier conduit (2) et une sortie reliée à fluide à une entrée du second conduit (3).

11. Module de purification d'émissions (1) selon la revendication 10 comprenant en outre un capteur de suie (50, 51) configuré pour déterminer une quantité de suie dans un DPF du module DPF, ledit capteur de suie étant un capteur RF ayant un émetteur (51) et un récepteur (50) situés à des extrémités opposées du DPF.

12. Module de purification d'émissions (1) selon la revendication 11 dans lequel l'un de l'émetteur (51) et du récepteur (50) est monté dans le premier conduit (2) au niveau d'une extrémité d'entrée du module DPF et l'autre de l'émetteur (51) et du récepteur (50) est monté dans le capuchon de flux (5).

13. Module de purification d'émissions (1) selon l'une quelconque des revendications 10 à 12 comprenant en outre un capteur de NOₓ situé pour déterminer une quantité de NOₓ dans les gaz d'échappement s'écoulant à travers le module de purification d'émissions (1) avant qu'ils ne passent dans le module SCR.

14. Module de purification d'émissions (1) selon la revendication 13 dans lequel ledit capteur de NOₓ est monté dans le capuchon de flux (5).

15. Module de purification d'émissions (1) selon la revendication 13 ou la revendication 14 dans lequel le capteur de NOₓ est monté dans une protubérance (52), qui est montée dans le capuchon de flux (5).

16. Mécanisme de montage pour un module de purification d'émissions (1) comprenant :
au moins un couple de courroies réglables (606) ;
au moins un couple de sabots (63) ; et
une plaque de montage (60) ;
dans lequel chacun des sabots (63) comprend une surface supérieure incurvée (601) configurée pour se conformer sensiblement à une partie d'un conduit (2, 4) et les sabots (63) sont montés adjacents l'un à l'autre sur la plaque de montage (60) ;
**caractérisé en ce que** chacun des sabots (63) comprend un élément supérieur (69) et un élément inférieur (64), l'élément supérieur (69) et l'élément inférieur (64) pouvant être reliés ensemble ; les éléments supérieurs (69) pouvant être montés sur un premier conduit (2) et un second conduit (4) d'un module de purification d'émissions (1) au moyen des courroies réglables (606) qui passent à travers les sabots (63) entre les éléments supérieur et inférieur (69, 64) et les éléments inférieurs (64) pouvant être montés sur la plaque de montage (60).

17. Mécanisme de montage pour un module de purification d'émissions (1) selon la revendication 16 dans lequel les surfaces supérieures (601) sont souples.
